# FASCICULE DE BREVET EUROPEEN

(11) **EP 1 245 582 B1**
(45) Date de publication et mention de la délivrance du brevet: **25.07.2007**
(21) Numéro de dépôt: 02290760.4
(22) Date de dépôt: 27.03.2002
(51) Int. Cl.: C08B 30/18, A23L 1/09, A23L 1/236

(54) **édulcorants de table enrichis en fibres**
Faserangereicherte Tafelsüssstoffe
Fibre-enriched table sweeteners

(30) Priorité: 30.03.2001 FR 0104414
(43) Date de publication de la demande: 02.10.2002
(73) Titulaire: Roquette Frères, 62136 Lestrem (FR)
(72) Inventeur: Serpelloni, Michel, 62660 Beuvry-Les-Bethune (FR)
(74) Mandataire: Boulinguiez, Didier

(56) Documents cités:
- EP-A- 0 335 852
- EP-A- 0 411 991
- EP-A- 1 006 128
- WO-A-95/02969
- US-A- 5 882 716

## Description

L'invention pour objet des édulcorants de table enrichis en fibres.

Plus précisément, l'invention a pour objet des édulcorants de table en poudre enrichis en fibres, contenant des maltodextrines branchées.

Les « édulcorants de table » s'entendent habituellement de compositions de remplacement de sucres traditionnels (saccharose) sous forme poudre qui présentent un pouvoir sucrant comparable ou supérieur à celui du saccharose, pour une valeur calorique du même ordre de grandeur (de l'ordre de 4 Kcal/g) voire plus faible.

Du fait de leur pouvoir sucrant en général supérieur, les quantités d'édulcorants de table nécessaires pour sucrer les aliments ou les boissons sont ainsi plus faibles que celles requises avec le saccharose, ce qui réduit d'autant la charge calorique pour une même pouvoir sucrant.

Le pouvoir édulcorant est par exemple apporté par des agents édulcorants intenses préparés par synthèse chimique de type saccharine, aspartame, acésulfame K, cyclamate, stévioside, sucralose, néotame ou alitame.

Ces édulcorants de table renferment également avec l'agent édulcorant, des agents de charge, habituellement choisis parmi les polyols, tels par exemple le sorbitol, le xylitol, le mannitol, le lactitol, le maltitol, l'érythritol et l'isomalt pris seuls ou en mélange, ou encore des polysaccharides ou des oligosaccharides de type dextrines, maltodextrines, polydextrose ou fructooligosaccharides.

Les édulcorants de table sont utilisés de manière intensive dans les industries des aliments et de la restauration, notamment sous forme poudre, pour leur apport de goûts sucrés sans apport calorique élevé.

De tels édulcorants de table sont ainsi largement répandus dans les aliments dits diététiques ou « light », destinés aux agents amincissants ou autres agents à valeur calorique contrôlée.

Ces édulcorants de table sont également utilisés dans les produits alimentaires destinés aux diabétiques. C'est ainsi que l'acésulfame K, qui n'est pas métabolisé par l'organisme, est communément utilisé dans de telles compositions.

Des édulcorants de table sont par exemple les édulcorants commercialisés sous le nom de marque « CANDEREL », constituées par le mélange de maltodextrines comme agent de charge et d'Aspartame comme agent édulcorant intense.

Le document EP-A-0 335 852 divulgue des produits comprenant de saccharose, des édulcorants à haut pouvoir sucrant tels que l'Aspartame, l'Acesulfame-K et le Sucralose et de maltodextrines.

Le document US-A-5 882 716 divulgue une poudre de café soluble qui peut contenir un édulcorant soluble naturel ou de synthèse tel que le sucrose, le fructose, le lactose, le maltose, la saccharine, les cyclamates, l'acésulfame, l'aspartame et des mélanges de ceux-ci. L'édulcorant soluble peut être combiné avec des maltodextrines, en particulier si un édulcorant de synthèse est utilisé.

Le document EP-A-0 411 991 divulgue une composition particulièrement utile pour la préparation d'un édulcorant destiné aux aliments contenant 0,1 à 2% d'aspartame ; 1 à 5% de maltitol ou de xylitol ; 9 à 40% de maltodextrine; et une quantité d'au moins 45% d'eau.

Cependant, ces produits présentent un certain nombre d'inconvénients comme la valeur énergétique intrinsèque élevée des agents de charge (les maltodextrines présentent déjà une valeur de caloricité de 4 Kcal/g), leur cariogénicité et l'absence d'effet fibre.

Une solution partielle a été proposée par la fabrication au Japon d'édulcorants sous le nom de marque ELISLIM où l'agent de charge est remplacé par de l'érythritol, ce qui rend le produit final acariogène, mais n'apporte toujours aucun effet fibre.

En outre, les agents édulcorants intenses présentent un certain nombre de défauts, comme par exemple le manque de stabilité au pH ou à la température et les arrière-goûts prononcés au-delà de certaines concentrations.

Il a été alors proposé de réutiliser des sucres en mélange avec les agents édulcorants.

La saveur sucrée est ainsi fournie pour partie par un agent édulcorant intense et pour l'autre par le sucre ou du glucose, qui maintient une saveur sucrée optimale et stable dans le temps, alors que l'agent édulcorant se décompose sous l'effet de l'acidité et de la chaleur, dès sa solubilisation.

Il a été proposé dans l'EP 1.060.674 des édulcorants de table où l'agent de charge comprend un polydextrose, et où l'agent édulcorant intense est de l'acésulfame K, de l'aspartame, du DL aminomanoyl-D-alanine isopropyl ester, du cyclamate de sodium, de la saccharine de sodium seuls ou en mélange.

Il a été proposé également comme édulcorants de table des compositions renfermant des fructooligosaccharides comme agent de charge avec du saccharose.

Ces fructooligosaccharides présentent des fonctionnalités supplémentaires, tels notamment ceux commercialisés sous la dénomination ACTILIGHT par BEGHIN-SAY ou par ORAFTI sous la dénomination RAFTILOSE.

Ces agents édulcorants de table, comme l'ACTISUCRE, à base de fructooligosaccharides, présentent ainsi en plus des effets bénéfiques pour la santé en termes de propriétés bifidogènes, au contraire des compositions citées ci-avant, i. e. les édulcorants de table à base d'érythritol (tel l'ELISLIM) ou de polydextrose.

Ces produits à base de fructooligosaccharides présentent cependant le désavantage d'être très instables en conditions de pH acides. Cette instabilité se traduit par une hydrolyse progressive en solutions acides, qui génère une libération indésirable de glucose et de fructose.

En outre, il est connu de l'homme du métier que les fructooligosaccharides à haute dose ne sont pas bien tolérés par l'organisme humain.

De tout ce qui précède, il résulte qu'il existe un besoin non satisfait de disposer d'édulcorants de table sources de fibres, ayant d'excellentes propriétés bifidogènes, non ou peu laxatifs, caractérisés également par leur non cariogénicité et leur grande stabilité aux acides et à la chaleur en solution aqueuse.

Après de longues et fastidieuses recherches, la société Demanderesse a montré que ce besoin pouvait être satisfait dès lors qu'on utilise, en tant que substitut des agents de charge, une maltodextrine particulière.

L'invention a donc pour objet des édulcorants de table enrichis en fibres, caractérisés en ce qu'ils comprennent de 3 à 99 %, et de préférence de 10 à 95% en poids de maltodextrines branchées présentant entre 15 et 35 % de liaisons glucosidiques 1-6, une teneur en sucres réducteurs inférieure à 20 %, un indice de polymolécularité inférieur à 5 et une masse moléculaire moyenne en nombre Mn au plus égale à 4500 g/mole, et qu'ils sont stables en conditions acides.

Par « maltodextrines branchées » on entend au sens de la présente invention les maltodextrines décrites dans la demande de brevet EP 1.006.128 dont la Demanderesse est titulaire. Ces maltodextrines branchées présentent un caractère d'indigestibilité qui a pour conséquence de diminuer leur pouvoir calorique, en empêchant leur assimilation au niveau de l'intestin grêle. Elles constituent donc une source de fibres indigestibles.

A titre indicatif, leur taux de fibres insolubles est généralement supérieur à 50% sur matière sèche, valeur déterminée selon la méthode AOAC N° 985-29 (1986).

En comparaison, l'ACTILIGHT présente une teneur en fibres insolubles inférieure à 2 % sur matière sèche, et le polydextrose, de l'ordre de 6 % sur matière sèche.

La faible teneur en molécules de bas degré de polymérisation (DP) desdites maltodextrines branchées contribue également à leur caloricité réduite.

La détermination du pouvoir calorique des maltodextrines branchées est effectuée par calcul, à partir de l'évaluation de la part représentée par la fraction indigestible dans l'intestin grêle et fermentée dans le gros intestin, considérée ici comme apportant 2Kcal/g. Les maltodextrines branchées ont ainsi une valeur calorique déduite inférieure à 2,5 Kcal/g.

Leur teneur élevée en liaisons glucosidiques 1→6 a pour conséquence d'abaisser leur pouvoir cariogène en réduisant leur assimilation par les micro-organismes de la cavité buccale.

Ce taux élevé en liaisons 1→6 leur confère également des propriétés prébiotiques tout à fait particulières : il est en effet apparu que les bactéries du cæcum et du colon de l'homme et des animaux, telles que les bactéries butyrogènes, lactiques ou propioniques métabolisent des composés hautement branchés.

D'autre part, ces maltodextrines branchées favorisent le développement des bactéries bifidogènes au détriment des bactéries indésirables. Il en résulte des propriétés tout à fait bénéfiques pour la santé du consommateur.

La Demanderesse a trouvé que l'incorporation desdites maltodextrines branchées permet donc avantageusement une substitution partielle ou totale des agents de charge dans les édulcorants de table enrichis en fibres conformes à l'invention de manière à en réduire la cariogénicité, et en constituant un apport de fibres indigestibles dans une application à laquelle ne pouvaient prétendre les fructooligosaccharides ou les polydextroses classiquement utilisés par ailleurs.

Ainsi, en substituant par exemple dans une composition édulcorante calorique tout ou partie des maltodextrines par les maltodextrines branchées conformes à l'invention, on peut obtenir une composition allégée jusqu'à 50 % de sa valeur calorique initiale, présentant des qualités organoleptiques satisfaisantes.

Toutes les compositions décrites dans la demande de brevet EP 1.006.128 sont appropriées à la préparation d'édulcorants de table selon l'invention.

Selon une variante préférée, celles-ci présentent une teneur en sucres réducteurs comprise entre 2 et 5% et une masse moléculaire en nombre comprise entre 2000 et 3000 g/mole.

Selon une autre variante avantageuse, tout ou partie de ces maltodextrines branchées sont hydrogénées.

Les édulcorants de table enrichis en fibres conformes à l'invention comprennent en outre un édulcorant intense choisi dans le groupe constitué par l'aspartame, l'acésulfame K, la saccharine, le cyclamate, le stévioside, le sucralose seuls ou en mélange.

Ledit édulcorant intense est présent à hauteur de 0,1 à 5 % en poids.

L'invention a en outre pour objet des édulcorants de table en poudre enrichis en fibre qui, en plus des maltodextrines branchées et desdits édulcorants intenses, renferment un complément de sucres ou de polyols.

Ces sucres ou polyols sont avantageusement choisis dans le groupe constitué par le saccharose, le dextrose, le fructose, le maltose, le lactose, les maltodextrines, les sirops de glucose déshydraté, le sorbitol, le xylitol, le mannitol, le maltitol, l'isomalt, le lactitol et l'érythritol, pris seul ou en combinaison.

Selon une variante avantageuse, lesdits agents édulcorants de table enrichis en fibres conformes à l'invention comprennent de 3 à 50 % en poids desdites maltodextrines branchées, le complément en poids à 100 % étant un sucre ou un polyol choisi dans le groupe constitué par le saccharose, le fructose, le dextrose, le maltose, les sirops de glucose déshydraté, le maltitol, le xylitol, le sorbitol, l'érythritol, l'isomalt, le thréitol et l'iditol pris seuls ou en combinaison.

Les édulcorants de table enrichis en fibres conformes à l'invention sont préparés en mettant en oeuvre une technique choisie parmi les techniques de co-atomisation ou de mélange physique de poudres, prises seules ou en combinaison, comme il sera exemplifié ci-après.

Selon une autre variante de la présente invention, lesdits édulcorants de table peuvent être formulés sous forme liquide, à une matière sèche d'environ 50%. Ces édulcorants de table liquide comprennent alors avantageusement 10 à 30% en poids desdites maltodextrines branchées, hydrogénées ou non, et 20 à 40% en poids d'au moins un polyol choisi dans le groupe constitué par le maltitol, le xylitol, l'érythritol, le sorbitol, l'isomalt.

De très bons résultats ont été obtenus avec une formulation comprenant 20% en poids de maltodextrines branchées hydrogénées, 15% en poids d'érythritol, et 15% en poids de maltitol ou de xylitol.

L'invention sera mieux comprise à la lecture des exemples qui suivent et des figures qui s'y rapportent.

### Exemple 1 : Préparation des édulcorants de table conformes à l'invention

Trois édulcorants de table conformes à l'invention sont préparés à l'aide de techniques de co-atomisation et de mélange physique de poudres. Leurs compositions respectives sont présentées dans le tableau I suivant.

**Tableau I**

| | Edulcorant de table A | Edulcorant de table B | Edulcorant de table C |
|---|---|---|---|
| Maltodextrines branchées | 97 | 17 | 6 |
| Erythritol | | | 93 |
| Saccharose | | 83 | |
| Aspartame | 3 | | 1 |

Les valeurs sont exprimées en % en poids.

Les maltodextrines branchées présentent entre 15 et 35% de liaisons glucosidiques 1→6, une teneur en sucres réducteurs comprise entre 2 et 5%, un indice de polymolécularité inférieur à 5 et une masse moléculaire moyenne en nombre Mn comprise entre 2000 et 3000 g/mole. Le tableau 2 suivant présente leur composition précise.

**Tableau 2**

| | 2,3 |
|---|---|
| Sucres réducteurs | |
| Mn (g/mole) | 2480 |
| Mw (g/mole) | 5160 |
| Liaison 1,2 (%) | 10 |
| Liaison 1,3 (%) | 12 |
| Liaison 1,4 (%) | 49 |
| Liaison 1,6 (%) | 29 |

Les dites maltodextrines présentent en outre un taux de fibres insolubles de 55% sur sec, déterminé selon la méthode AOAC (N°985-29).

Pour préparer l'édulcorant de table A, on procède à l'atomisation du mélange de maltodextrine et d'aspartame dans les conditions suivantes.

Un mélange de maltodextrines et d'aspartame dans les proportions indiquées dans le tableau I à 40 % de matière sèche est amené à la température de 50°C.

Le mélange ainsi préchauffé alimente un atomiseur NIRO de type FU11DA720 référencé P208 à turbine. La température d'air à l'entrée de l'atomiseur est fixée à une valeur de 200 à 210 °C, et la température de l'air à la sortie est de 90°C.

Pour préparer l'édulcorant de table B, on procède au mélange à sec des deux constituants sous forme de poudre en mélangeur de type LÖDIGE par une technique connue par ailleurs de l'homme du métier.

Le conditionnement est effectué en sachets de 6 g, sans qu'il ne soit constaté de problème de séparation de phase.

Pour préparer l'édulcorant de table C, on procède également au mélange à sec des poudres en mélangeur de type LÖDIGE, et le conditionnement est effectué en doses individuelles.

### Exemple 2 : étude de la stabilité en conditions acides des maltodextrines branchées utilisées comme agents de charge

Afin d'estimer la stabilité des maltodextrines branchées en conditions acides, on prépare des solutions à différents pH, contenant soit des fructooligosaccharides (ACTILIGHT 950P ou RAFTILOSE P35) en témoin de l'état de la technique, soit des maltodextrines branchées conformes à l'invention.

On mesure au cours du stockage l'évolution des masses moléculaires de ces oligosaccharides en solution, par exclusion stérique suivie d'une détection par réfractométrie différentielle.

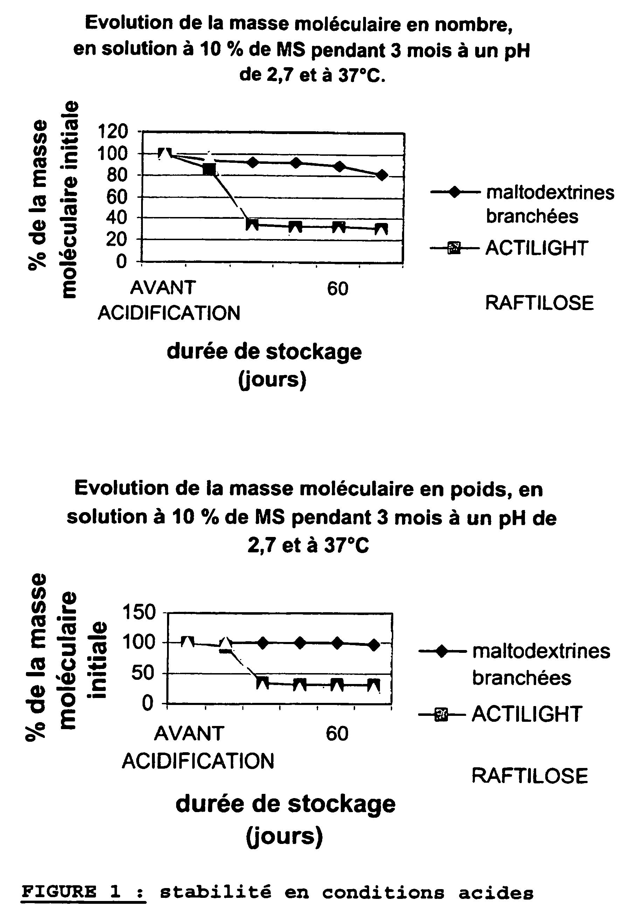

Les résultats sont illustrés en figure 1.

Dans le cas des maltodextrines branchées, on constate une très légère répercussion de l'acidification des solutions. Il y a donc une légère hydrolyse aux pH très acides (inférieurs à 3) qui se traduit par une évolution du poids moléculaire vers des valeurs plus basses. Après deux semaines de stockage, les différences ne sont pas supérieures à celles observées immédiatement après acidification. Après 1 mois de stockage, seules les valeurs obtenues pour les pH très faibles (inférieurs à 2,7) ont diminué par rapport au vieillissement de deux semaines. On passe d'un poids moléculaire en nombre de 2800 daltons à 2400 daltons pour des solutions à pH 2.

Dans le cas des fructooligosaccharides, après deux semaines de stockage à pH 2 le poids moléculaire est réduit à 30% de sa valeur initiale. Après 1 mois, les solutions à pH 2 et 2,7 contiennent de l'ACTILIGHT très fortement dégradé.

Conclusion : les maltodextrines branchées sont bien adaptées aux conditions de pH acide.

### Exemple 3 : Caractéristiques des édulcorants de table conformes à l'invention

Les tableaux ci-après reprennent les avantages technologiques conférés par la composante maltodextrines branchées comme agent de charge des édulcorants de table conformes à l'invention.

L'édulcorant de table A conforme à l'invention est comparé à un édulcorant de table de type CANDEREL, qui renferme également 3 % en poids d'aspartame, mais 97 % en poids de maltodextrine standard.

L'édulcorant de table B conforme à l'invention est comparé à un édulcorant de table de type ACTISUCRE, qui renferme également 83 % en poids de saccharose, mais 17 % en poids de fructooligosaccharides.

Quant à l'édulcorant de table C conforme à l'invention, il est comparé à un édulcorant de table de type ELISLIM, qui renferme 99 % en poids d'érythritol et 1 % en poids d'aspartame.

La détermination du pouvoir calorique est effectuée par calcul comme indiqué ci-avant. La détermination de la teneur en fibres insolubles de l'agent de charge est effectuée selon la méthode AOAC (N°985-29). La stabilité en milieu acide est effectuée en suivant le protocole décrit dans l'exemple 2.

Les tableaux III, IV et V suivants présentent les résultats obtenus en comparant l'édulcorant de table A avec l'édulcorant de table de type CANDEREL, l'édulcorant de table B avec l'édulcorant de table de type ACTISUCRE et l'édulcorant de table C avec l'édulcorant de table de type ELISLIM, respectivement.

**Tableau III**

| | Edulcorant de table de type CANDEREL | Edulcorant de table A |
|---|---|---|
| Pouvoir calorique (Kcal/g) | 4 | 2,06 |
| Teneur en fibre de l'agent de charge (%) | <2 | 55 |
| Stabilité en conditions acides | + | +++ |

**Tableau IV**

| | Edulcorant de table de type ACTISUCRE | Edulcorant de table B |
|---|---|---|
| Pouvoir calorique (Kcal/g) | 3,66 | 3,66 |
| Teneur en fibre de l'agent de charge (%) | 2 | 55 |
| Stabilité en conditions acides | + | +++ |

**Tableau V**

| | Edulcorant de table de type ELISLIM | Edulcorant de table C |
|---|---|---|
| Pouvoir calorique (Kcal/g) | < 1 | < 1 |
| Teneur en fibre de l'agent de charge (%) | < 1 | 55 |
| Stabilité en conditions acides | + | +++ |

Grâce à leur composante maltodextrine branchée comme agent de charge, les édulcorants de table conforme à l'invention présentent de remarquables propriétés de par leur teneur très élevée en fibres indigestibles, et leur excellente stabilité en conditions acides.

## Revendications

1. Edulcorants de table enrichis en fibres, **caractérisés en ce qu'**ils comprennent de 3 à 99 % en poids de maltodextrines branchées présentant entre 15 et 35 % de liaisons glucosidiques 1-6, une teneur en sucres réducteurs inférieure à 20 %, un indice de polymolécularité inférieur à 5 et une masse moléculaire moyenne en nombre Mn au plus égale à 4500 q/mole, **en ce qu'**ils comprennent en outre de 0,1 à 5% en poids d'un édulcorant choisi dans le groupe constitué par l'aspartame, l'acésulfame K, la saccharine, le cyclamate, le stévioside, le sucralose seuls ou en mélange, et qu'ils sont stables en conditions acides.

2. Edulcorants de table selon la revendication 1, **caractérisés en ce que** lesdites maltodextrines branchées présentent une teneur en sucres réducteurs comprise entre 2 et 5 % et une masse moléculaire moyenne en nombre Mn comprise entre 2000 et 3000 g/mole.

3. Edulcorants de table selon l'une ou l'autre des revendications 1 et 2, **caractérisés en ce que** tout ou partie desdites maltodextrines branchées est hydrogénée.

4. Edulcorants de table selon l'une quelconque des revendications 1 à 3, **caractérisés en ce qu'**ils comprennent également un sucre ou un polyol choisi dans le groupe constitué par le saccharose, le dextrose, le fructooe, le maltose, le lactose, les maltodextrines, les sirops de glucose déshydraté, le sorbitol, le xylitol, le mannitol, le maltitol, l'isomalt et l'érythritol, pris seul ou en combinaison.

5. Procédé de préparation des édulcorants de table selon l'une quelconque des revendications 1 à 4, **caractérisé en ce que** l'on met en oeuvre une technique choisie parmi les techniques de co-atomisation ou de mélange physique de poudres, prises seules ou en combinaison.

6. Edulcorant de table selon l'une quelconque des revendications 1 à 4, **caractérisé en ce qu'**il se présente sous forme liquide et qu'il comprend 10 à 30% en poids desdites maltodextrines branchées, hydrogénées ou non, et 20 à 40% en poids d'au moins un polyol choisi dans le groupe constitué par le maltitol, le xylitol, l'érythritol, le sorbitol, l'isomalt.

## Claims

1. Fibre-enriched table sweeteners, **characterized in that** they comprise from 3 to 99% by weight of branched maltodextrins having between 15 and 35% of 1->6 glucoside linkages, a reducing sugar content of less than 20%, a polymolecularity index of less than 5, and a number-average molecular mass Mn at most equal to 4500 g/mol, **in that**, in addition, they comprise 0.1 to 5% by weight of a sweetener selected from the group consisting of aspartame, acesulfame K, saccharin, cyclamate, stevioside, sucralose, alone or as a mixture, and **in that** they are stable under acidic conditions.

2. Table sweeteners according to claim 1, **characterized in that** said branched maltodextrins have a reducing sugar content of between 2 and 5%, and a number-average molecular mass Mn of between 2000 and 3000 g/mol.

3. Table sweeteners according to claim 1 or 2, **characterized in that** all or some of said branched maltodextrins are hydrogenated.

4. Table sweeteners according to any one of claims 1 to 3, **characterized in that** they also comprise a sugar or a polyol selected from the group consisting of sucrose, dextrose, fructose, maltose, lactose, maltodextrins, dehydrated glucose syrups, sorbitol, xylitol, mannitol, maltitol, isomalt and erythritol, taken alone or in combination.

5. Process for preparing table sweeteners according to any one of claims 1 to 4, **characterized in that** a technique is used which is selected from the techniques of co-spray-drying or of physical mixing of powders, alone or in combination.

6. Table sweetener according to any one of claims 1 to 4, **characterized in that** it is provided in liquid form and it comprises 10 to 30% by weight of said branched maltodextrins, hydrogenated or not, and 20 to 40% by weight of at least one polyol selected from the group consisting of maltitol, xylitol, erythritol, sorbitol, isomalt.

## Patentansprüche

1. Faserangereicherte Tafelsüßstoffe, **dadurch gekennzeichnet, dass** diese 3 bis 99 Gew.-% verzwelgte Maltodextrine umfassen, die zwischen 15 und 35% 1,6-glycosidische Bindungen, einen Gehalt an reduzierenden Zuckern von weniger als 20%, einen Polymolekular-Index von weniger als 5 und ein Zahlenmittel des Molekulargewichts Mn von gleich oder weniger als 4500 g/Mol aufweisen, und **dadurch**, dass diese ferner 0,1 bis 5 Gew.-% eines Süßstoffs, ausgewählt aus der Gruppe bestehend aus Aspartam, Acesulfam K, Saccharin, Cyclamat, Steviosid, Sucralose, einzeln oder in Mischung, umfassen, und dass diese unter sauren Bedingungen stabil sind.

2. Tafelsüßstoffe nach Anspruch 1, **dadurch gekennzeichnet, dass** die verzweigten Maltodextrine einen Gehalt an reduzierenden Zuckern zwischen 2 und 5% und ein Zahlenmittel des Molekulargewichts Mn zwischen 2000 und 3000 g/Mol aufweisen.

3. Tafelsüßstoffe nach Anspruch 1 oder 2, **dadurch gekennzeichnet, dass** alle oder ein Tell der verzweigten Maltodextrine hydriert sind.

4. Tafelsüßstoffe nach einem der Ansprüche 1 bis 3, **dadurch gekennzeichnet, dass** diese auch einen Zucker oder ein Polyol, ausgewählt aus der Gruppe bestehend aus Saccharose, Dextrose, Fructose, Maltose, Lactose, Maltodextrinen, getrockneten Glucosesirupen, Sorbit, Xylitol, Mannitol, Maltit, Isomalt und Erythritol, einzeln oder In Kombination, umfassen.

5. Verfahren zur Herstellung von Tafelsüßstoffen nach einem der Ansprüche 1 bis 4, **dadurch gekennzeichnet, dass** eine Methode ausgewählt unter den Methoden des Co-Zerstäubens oder physikalischen Messens von Pulvern, einzeln oder In Kombination, eingesetzt wird.

6. Tafelsüßstoff nach einem der Ansprüche 1 bis 4, **dadurch gekennzeichnet, dass** dieser in flüssiger Form vorliegt und 10 bis 30 Gew.-% der verzweigten Maltodextrine, hydriert oder nicht hydriert, und wenigstens 20 bis 40 Gew.-% eines Polyols ausgewählt aus der Gruppe bestehend aus Maltit, Xylitol, Erythritol, Sorbit und Isomalt umfasst
